# EUROPEAN PATENT SPECIFICATION

(11) **EP 4 480 641 B1**
(45) Date of publication and mention of the grant of the patent: **30.04.2025**
(21) Application number: 23179997.4
(22) Date of filing: 19.06.2023
(51) Int. Cl.: B25J 9/00, B25J 9/06, B25J 19/06

(54) **ROBOTIC ARM WITH AN INTEGRATED CONTROL UNIT**
ROBOTERARM MIT INTEGRIERTER STEUEREINHEIT
BRAS ROBOTIQUE AVEC UNITÉ DE COMMANDE INTÉGRÉE

(43) Date of publication of application: 25.12.2024
(73) Proprietor: Kassow Robots ApS, 2770 Kastrup (DK)
(72) Inventor: KASSOW, Kristian, 2300 Copenhagen S (DK); KIEFFER, Lasse, 5000 Odense C (DK)
(74) Representative: COPA Copenhagen Patents

(56) References cited:
- US-A1- 2014 379 129
- US-A1- 2018 161 993
- US-A1- 2019 099 881
- US-A1- 2023 150 119
- US-B2- 11 465 285
- US-B2- 9 597 794

## Description

The present disclosure relates to a control unit for a robot comprising robotic arm.

### BACKGROUND

Robots and in particular robotic arms are widely used to perform a wide variety of automated tasks. Recently lightweight robots have increased in popularity for assisting human activities, e.g. in production facilities. These robots are commonly known as collaborative robots or cobots.

US 9 597 794 B2 relates to a robot including a base part having a first cavity part inside, a torso part coupled to the base part, at least one arm unit provided on the torso part, and an inner box provided in the first cavity part and having a second cavity part opening in an upper portion. A circuit board for driving an actuator that operates the arm unit is provided on an outer side surface of the inner box.

US 2018/161993 A1 relates to a transfer system provided with a transfer apparatus that has an arm mechanism to transfer a workpiece, a control device that supplies electric power to the transfer apparatus and controls the motions of the transfer apparatus, and a power cable that connects between the control device and the transfer apparatus. The control device sends and receives a signal for controlling the transfer apparatus through the power cable. The transfer apparatus is provided with a plurality of motors for driving the transfer apparatus, a plurality of drive control sections for applying electric power supplied from the control device to the plurality of motors for driving the motor, and internal power lines that connect the plurality of drive control sections. The plurality of drive control sections each sends and receives the signal to and from the control device through the power cable and the internal power lines and drives the motor according to the signal. US 2019/099881 A1 relates to a robot including a base, a robot arm including a first arm provided on the base and rotating around a first rotation axis, a first motor provided in the first arm and configured to rotate the first arm, a control board provided on an inside of the base and configured to control driving of the robot arm, and a power supply board provided on the inside of the base and configured to supply electric power to the control board. The robot includes a first driving board configured to drive the first motor on the basis of a command of the control board. The first driving board is provided in the first arm.

US 2023/1500119 A1 relates to a robot including at least two joints having a first joint and a second joint. The first joint is provided with a first drive source, and the second joint is provided with a second drive source. A motor drive substrate for driving the first drive source and a motor drive substrate for driving the second drive source are differentiated in size.

US 11 465 285 B2 relates to a robot system including a robot collaboratively acting with a human, a force sensor provided in the robot and detecting a force, a control unit decelerating or stopping an action of the robot based on output from the force sensor, a first temperature sensor detecting a temperature of the force sensor, and an execution unit performing warm-up operation in the robot until output from the first temperature sensor reaches a first target value.

US 2014/379129 A1 relates to an example modular reconfigurable workcell for quick connection of peripherals. In one example, a modular reconfigurable workcell comprises modular docking bays on a surface of the workcell that support attachment of docking modules in a fixed geometric configuration, and respective modular docking bays include electrical connections for a variety of power and communication busses of the docking modules to be attached. The workcell also includes an electrical subsystem for coupling the communication busses between the modular docking bays and providing power circuitry to the modular docking bays, and structural features in the modular docking bays to enable insertion of the docking modules in the fixed geometric configuration. The workcell also includes a processor for determining a geometric calibration of attached peripherals based on a location and the orientation of corresponding docking modules attached to the modular docking bays and based on an identification of the attached peripherals.

For robots, such as robotic arms, it is desirous to enhance flexibility and facilitate more compact robot solutions. It is a further objective to increase productivity, e.g. by utilizing such robots in performing various tasks and/or by changing between different tasks.

### SUMMARY

It is an object of the present disclosure at least to provide improvements of the prior art and/or to solve or reduce problems known from the prior art. It is a further object of the present disclosure to provide an advantageous or at least alternative robot, robotic assembly, and/or components thereof.

More particularly, the present disclosure provides a solution which provides enhanced flexibility, at least in terms of enhancing mobility of the robot. For example, the present disclosure may facilitate and/or enhance the ability of a robot forming part of an automated guided vehicle (AGV) and/or an autonomous mobile robot (AMR).

Furthermore, the present solution also provides for simplification of the robot itself as well as its connection with other units.

Accordingly, the present disclosure comprises a robot comprising a robotic arm extending between a base end and a tool end and comprising a base at the base end and a plurality of joints including a first joint and a second joint. The present disclosure also relates to accompanying devices and elements associated with such robot and robotic arm, such as a control unit for a robot.

The present invention is further defined by the appended set of claims.

It is an advantage of the present disclosure that components of a control unit may be fitted in the base of a robotic arm in a compact manner, thereby providing for a more compact base of a robotic arm. It is further an advantage of the present disclosure that components of the control unit may be assembled, before being inserted into confined spaces of the robotic arm. Thereby, assembly of the robotic arm may be made easier and faster, resulting in reduced production cost and time, as well as reducing the risk of faulty assemblies.

### GENERAL DESCRIPTION

A control unit for a robot is disclosed. The robot comprises a robotic arm extending between a base end and a tool end. The robotic arm comprises a base at the base end. The robotic arm may be configured for coupling with a tool at the tool end. For example, the robotic arm may comprise a tool flange, e.g. for connecting the tool, at the tool end.

The robotic arm comprises a plurality of joints connecting the base and the tool end. The plurality of joints includes a first joint and a second joint, and optionally one or more of a third joint, a fourth joint, a fifth joint, a sixth joint and a seventh joint.

The first joint is positioned between the base and the second joint. The second joint may be positioned between the first joint and the tool end and/or between the first joint and the third joint. The third joint may be positioned between the second joint and the tool end and/or between the second joint and the fourth joint. The fourth joint may be positioned between the third joint and the tool end and/or between the third joint and the fifth joint. The fifth joint may be positioned between the fourth joint and the tool end and/or between the fourth joint and the sixth joint. The sixth joint may be positioned between the fifth joint and the tool end and/or between the fifth joint and the seventh joint. The seventh joint may be positioned between the sixth joint and the tool end, such as between the sixth joint and the tool flange at the tool end.

The robotic arm comprises a plurality of motors to cause movement of the robotic arm with respect to a plurality of axes. The plurality of motors includes a first motor and a second motor, and optionally one or more of a third motor, a fourth motor, a fifth motor, a sixth motor and a seventh motor. Any or all of the plurality of motors may be a permanent magnet AC motor. Any or all of the plurality of motors may comprise a gear assembly, e.g. an integral gear, such as a strain wave gear. Hence, any or all of the plurality of motors may be a gear motor.

The first motor causes movement of the first joint with respect to a first axis. The second motor causes movement of the second joint with respect to a second axis. The third motor may cause movement of the third joint with respect to a third axis. The fourth motor may cause movement of the fourth joint with respect to a fourth axis. The fifth motor may cause movement of the fifth joint with respect to a fifth axis. The sixth motor may cause movement of the sixth joint with respect to a sixth axis. The seventh motor may cause movement of the seventh joint with respect to a seventh axis.

The robotic arm may comprise a plurality of motor controllers, i.e. processing units adapted to control the plurality of motors. For example, the plurality of motor controllers may include a first motor controller, a second motor controller, a third motor controller, a fourth motor controller, a fifth motor controller, a sixth motor controller and/or a seventh motor controller. The first motor controller may be adapted to control the first motor. The second motor controller may be adapted to control the second motor. The third motor controller may be adapted to control the third motor. The fourth motor controller may be adapted to control the fourth motor. The fifth motor controller may be adapted to control the fifth motor. The sixth motor controller may be adapted to control the sixth motor. The seventh motor controller may be adapted to control the seventh motor.

The control unit for a robot is disclosed, such as a control unit for the above-mentioned robot comprising a robotic arm. The control unit is adapted to be arranged at the base end of the robotic arm. The control unit is adapted to form part of the base of the robotic arm. The control unit may be adapted to be arranged between the robotic arm and a structure to which the robotic arm is to be fastened. The structure may be a factory floor or another structure from which the robotic arm is meant to work from. The robot and/or the robotic arm as disclosed above may comprise the control unit. For example, the robot as disclosed may comprise the control unit being arranged at the base end of the robotic arm. Thus, the base of the robotic arm may comprise the control unit. The first motor controller may be arranged between the control unit and the first motor.

The control unit comprises an electrical power input and/or an electrical power supply unit. The electrical power input and/or the electrical power supply unit is adapted to electrically power electrical components of the robotic arm, e.g. the plurality of motors and/or electronic circuitries of the robotic arm. The electrical power supply unit may comprise a battery. The electrical power input and/or the electrical power supply unit may comprise one or more electrical terminals and/or wires for drawing electrical power from an external power supply.

The control unit may comprise a main board with a main processing unit. The main board may be a printed circuit board (PCB). The main processing unit may be the main processing unit for control of the robot. The main processing unit may be adapted to determine one or more operational parameters for the plurality of motors. For example, so as to let the robotic arm perform a desired movement or task. The one or more operational parameters may, for example, include torque, angular velocity and/or angular acceleration for each of the plurality of motors. The main processing unit may be adapted to execute a program of movements and actions to be performed by the robotic arm.

The main board may be arranged to form an angle of less than 135 degrees with respect to the first axis. For example, less than 120 degrees, such as less than 105 degrees, such as less than 100 degrees, such as less than 95 degrees. In some examples, the main board may be arranged to be perpendicular and/or substantially perpendicular to the first axis.

The control unit comprises an IO board with a plurality of IO terminals. The plurality of IO terminals are a plurality of 24 volts digital IO terminals, i.e. terminals facilitating a digital input/output corresponding to a standard 24 volts input/output, such as an input/output signal having a voltage within a voltage range between 19-28 volts, such as between 23-25 volts. The plurality of IO terminals (e.g. the plurality of 24 volts digital IO terminals) comprises a primary IO terminal and a secondary IO terminal. The primary IO terminal is a first primary IO terminal, e.g. of a first IO terminal block, and the secondary IO terminal is a first secondary IO terminal, e.g. of the first IO terminal block. The plurality of IO terminals (e.g. the plurality of 24 volts digital IO terminals) may comprise a second primary IO terminal and/or a second secondary IO terminal, e.g. of a second IO terminal block.

The IO board may be a printed circuit board (PCB) The IO board may be used for calculations relating to the entire robot as well as handling inputs and input interfaces of the robot. The plurality of IO terminals may be terminal blocks. In some examples, the main board and the IO board may be combined into an IO board comprising the main processing unit.

The IO board comprises IO processing units, e.g. a first IO processing unit and/or a second IO processing unit. The one or more IO processing units may be responsible for calculating motion characteristics, such as movement and/or position and/or torque of the robotic arm and/or parts of the robotic arm. In the case of the IO board comprising a plurality of IO processing units, e.g. both a first IO processing unit and a second IO processing unit, the IO processing units may redundantly calculate the motion characteristics of the robotic arm and/or parts of the robotic arm, such as to ensure a safe operating robot. In some examples, the two processing units (the first IO processing unit and the second IO processing unit) may be two processor cores of the same chip. However, in other examples, the two processing units may be separate chips.

The primary IO terminal (e.g. the first primary IO terminal) is electrically connected to the first IO processing unit. The secondary IO terminal (e.g. the first secondary IO terminal) is electrically connected to the second IO processing unit. The second primary IO terminal may be electrically connected to the first IO processing unit. The second secondary IO terminal may be electrically connected to the second IO processing unit. By connecting primary IO terminals to the first IO processing unit and secondary IO terminals to the second IO processing unit, inputs and/or outputs may be verified redundantly by separate processing units, thereby facilitating safe operation of the robot, e.g. in line with safety standards, such as ISO 13849-1. Thus, the IO board may facilitate redundant processing of input/output signals.

The IO board and the main board may be connected by an ethernet connection. The IO board and the main board and the plurality of motor controllers may be connected by the ethernet connection, e.g. an ethernet daisy chain connection. For example, the IO board, the main board and the first motor controller may be connected by an ethernet daisy chain connection, e.g. from the main board to the IO board, and from the IO board to the first motor controller.

The control unit may comprise a bottom plate. The bottom plate may form a bottom surface of the control unit and/or of the base of the robotic arm. The bottom plate may be arranged perpendicular to the first axis. The bottom plate may be adapted to abut a structure to which the robot is to be fastened. The main board and the bottom plate board may be substantially parallel.

The main board and the IO board may be substantially parallel. The IO board and the bottom player may be substantially parallel.

The IO board may be arranged between the bottom plate and the main board. In an alternative example, the main board may be arranged between the bottom plate and the IO board.

The control unit may comprise a plurality of main standoffs connecting the main board and the bottom plate. For example, the plurality of main standoffs may facilitate connection of the main board to the bottom plate while the IO board is arranged between the bottom plate and the main board. The plurality of main standoffs may be sized such that the IO board may be arranged between the bottom plate and the main board. The main standoffs may be more than 1 cm, such as more than 2 cm, such as more than 3 cm. The control unit may comprise a plurality of IO standoffs connecting the IO board and the bottom plate. The IO standoffs may be smaller than the main standoffs. The IO standoffs may be less than 2 cm, such as less than 1 cm.

The bottom plate may be made of a material having a high thermal conductivity, such as at least 100 W/(m·K). For example, the bottom plate may be made of aluminium, copper or one or more alloys of different materials, e.g. comprising aluminium and/or copper. Thereby, the bottom plate may facilitate transfer of heat from the control unit to the structure to which the robot is attached.

The control unit may comprise a heat transferring block. The heat transferring block may thermally connect the main processing unit and the bottom plate. The heat transferring block may be made of a material having a high thermal conductivity, such as at least 100 W/(m·K). For example, the heat transferring block may be made of aluminium, copper or one or more alloys of different materials, e.g. comprising aluminium and/or copper. The heat transferring block may be made of the same material as the bottom plate. In some examples, the heat transferring block may form an integral part of the bottom plate.

The IO board may comprise an opening. The opening may allow the heat transferring block to extend through the IO board. Hence, the heat transferring block may extend through the opening. Thereby, the heat transferring block may thermally connect the main processing unit with the bottom plate, even in the example where the IO board is arranged between the bottom plate and the main board.

The plurality of IO terminals may have a connection direction. The connection direction may be the direction in which wires and/or connectors are being connected to the IO terminals. The connection direction may be substantially parallel to the first axis and/or substantially perpendicular to the bottom plate. The connection direction may be towards the structure to which the robot is attached. In another example, the connection direction may be substantially perpendicular to the first axis and/or substantially parallel to the bottom plate.

The IO board may have an IO board length along a first direction. The first direction may be perpendicular to the first axis and/or parallel to the bottom plate and/or main board. The main board may have a main board length along the first direction. The IO board may have an IO board width along a second direction. The second direction may be perpendicular to the first direction. The second direction may be perpendicular to the first axis and/or parallel to the bottom plate and/or main board. The main board may have a main board width along the second direction. The IO board length may be longer than the main board length, e.g. more than 20% longer. The IO board width may be substantially the same as the main board width, e.g. within 5% of the same width.

The IO board may comprise a first IO board part and a second IO board part. The second IO board part may comprise the plurality of IO terminals. The first IO board part may be non-parallel to the second IO board part. For example, the first IO board part may be substantially perpendicular to the second IO board part.

The main board and the first IO board part may be substantially parallel. The bottom plate and the first IO board part may be substantially parallel. The first IO board part may be substantially perpendicular to the first axis. The second IO board part may be substantially parallel to the first axis. The second IO part may be substantially perpendicular to the bottom plate and/or the main board.

In this example, where the IO terminals are part of the second IO board part, it may be preferred that the connection direction of the plurality of IO terminals is substantially perpendicular to the first axis and/or substantially parallel to the bottom plate.

The second IO board part may have a second IO board part length along the first axis from the first IO board part. The first motor may be spaced from the first IO board part by a first motor to first IO board part distance. The second IO board part length may be longer than the first motor to first IO board part distance. Thereby space within the base may be used more optimally.

The bottom plate has a bottom plate circumference. The bottom plate has a bottom plate diameter, which may be defined as the diameter of the incircle of the bottom plate circumference. The base has a first joint circumference at the first joint. The base has a first joint diameter of the first joint circumference at the first joint. The bottom plate circumference, the first joint circumference, the bottom plate diameter and the first joint diameter may all be measured in the plane of the bottom plate and/or in the plane normal to the first axis. The bottom plate circumference may be larger than the first joint circumference. The bottom plate diameter may be larger than the first joint diameter.

The base may have a first wall section. The first wall section may be substantially parallel to the first axis and/or substantially perpendicular to the bottom plate. The base may have a second wall section. The second wall section may extend from the first wall section towards the first joint. The second wall section may be non-parallel to the first axis. For example, the second wall section may be angled towards the first axis.

The base may comprise a base aperture providing access to the plurality of IO terminals. The base may further comprise a removable cover plate covering and/or adapted to cover the base aperture. The base aperture and/or the removable cover plate may be angled relative to the first axis, e.g. an angle between the first axis and the base aperture and/or the removable cover plate may be between 10 and 60 degrees, such as between 20 and 50 degrees, such as between 25 and 40 degrees.

The bottom plate may comprise a bottom plate aperture. The bottom plate aperture may form a passageway for wires being connected to the plurality of IO terminals.

The control unit may comprise an energy consumption unit. The energy consumption unit may serve the purpose of handling excess electrical power on a power bus of the robot and/or from motors of the robot, which may be generated in situations, where a motor of the robot is braking an ongoing motion. The energy consumption unit may comprise one or more resistors. The one or more resistors of the energy consumption unit may be adapted to handle the excess electrical power by converting it to heat. The energy consumption unit may comprise a heat dissipating surface. The heat dissipating surface of the energy consumption unit may be a surface of the one or more resistors of the energy consumption unit. The energy consumption unit may be arranged at the bottom plate, e.g. with the heat dissipating surface of the energy consumption unit abutting (e.g. contacting) the bottom plate, such as to facilitate heat transfer between the energy consumption unit and the bottom plate.

### BRIEF DESCRIPTION OF THE FIGURES

Embodiments of the disclosure will be described in more detail in the following with regard to the accompanying figures. The figures show one way of implementing the present disclosure and are not to be construed as being limiting to other possible embodiments falling within the scope of the attached claim set.
Fig. 1 is a schematic diagram illustrating an exemplary robot,
Fig. 2 is a schematic diagram illustrating exemplary joints,
Figs. 3A and 3B are schematic diagrams illustrating an exemplary base of a robotic arm,
Fig. 4 is a schematic diagram illustrating an exemplary control unit,
Fig. 5 is a schematic diagram illustrating an exemplary base of a robotic arm,
Fig. 6A is a schematic diagram illustrating an exemplary base of a robotic arm,
Fig. 6B is a schematic diagram illustrating an exemplary control unit.

### DETAILED DESCRIPTION

Various exemplary embodiments and details are described hereinafter with reference to the figures, when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the invention or as a limitation on the scope of the invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

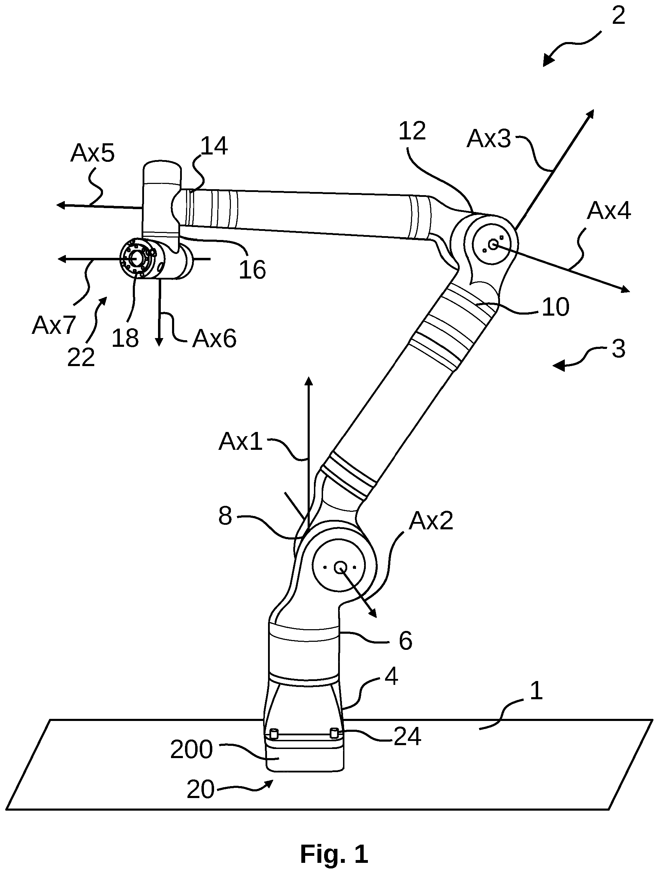

Fig. 1 is a schematic diagram illustrating an exemplary robot 2, which in the present example comprises a robotic arm 3, more particularly, a seven-axis robotic arm.

The robotic arm 3 extends between a base end 20 and a tool end 22 and comprising a base 4 at the base end 20. A tool flange for connection with a tool may preferably be arranged at the tool end 22 of the robotic arm. The robotic arm 3 further comprises a plurality of joints 6, 8, 10, 12, 14, 16, 18. The plurality of joints 6, 8, 10, 12, 14, 16, 18 connects the base 4 and the tool end 22. In the illustrated example, the plurality of joints are seven joints, i.e. including a first joint 6, a second joint 8, a third joint 10, a fourth joint 12, a fifth joint 14, a sixth joint 16 and a seventh joint 18. However, in other examples, the robotic arm may comprise fewer or more joints. For example, the robotic arm 3 may, in another configuration, comprise only three joints, such as the first, second and third joints 6, 8, 10.

The first joint 6 is positioned between the base 4 and the second joint 8. The second joint 8 is positioned between the first joint 6 and the third joint 10. The third joint 10 is positioned between the second joint 8 and the fourth joint 12. The fourth joint 12 is positioned between the third joint 10 and the fifth joint 14. The fifth joint 14 is positioned between the fourth joint 12 and the sixth joint 16. The sixth joint 16 is positioned between the fifth joint 14 and the seventh joint 18. The seventh joint 18 is positioned between the sixth joint 16 and the tool end 22.

The plurality of joints 6, 8, 10, 12, 14, 16, 18 cause movement of the robotic arm 3, e.g. movement of the tool end 22 relative to the base end 20. Each joint provides for rotation about a respective axis. The first joint 6 provides for rotation about a first axis Ax1. The second joint 8 provides for rotation about a second axis Ax2. The third joint 10 provides for rotation about a third axis Ax3. The fourth joint 12 provides for rotation about a fourth axis Ax4. The fifth joint 14 provides for rotation about a fifth axis Ax5. The sixth joint 16 provides for rotation about a sixth axis Ax6. The seventh joint 18 provides for rotation about a seventh axis Ax7.

The robotic arm 3 may be put in some configurations, where none of the seven axes Ax1-Ax7 are parallel. However, in some other configurations two or more of the seven axes Ax1-Ax7 may be parallel. As illustrated, the second axis Ax2 may be non-parallel with the first axis Ax1. The third axis Ax3 may be non-parallel with the second axis Ax2. The fourth axis Ax4 may be non-parallel with the third axis Ax3. The fifth axis Ax5 may be non-parallel with the fourth axis Ax4. The sixth axis Ax6 may be non-parallel with the fifth axis Ax5. The seventh axis Ax7 may be non-parallel with the sixth axis Ax6.

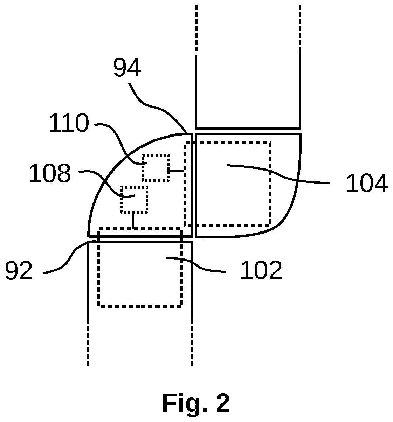

The robotic arm may comprise a plurality of motors as described in more detail relation to Fig. 2, e.g. including a motor for each of the plurality of joints 6, 8, 10, 12, 14, 16, 18. Each of the plurality of motors may cause movement of a respective joint of the plurality of joints 6, 8, 10, 12, 14, 16, 18. For example, a first motor may cause movement of the first joint 6 with respect to the first axis Ax1. A second motor may cause movement of the second joint 8 with respect to the second axis Ax2. A third motor may cause movement of the third joint 10 with respect to the third axis Ax3. And so forth.

The robotic arm 3 is fastened at the base end 20 to a structure 1, which may be a factory floor or another structure from which the robotic arm 3 is meant to work from. In some examples, the structure 1 may be part of a movable unit, such as a mobile robot or a vehicle, which would allow the robot 2 or at least the robotic arm 3 to be moved between different positions. The robotic arm 3 may be fastened to the structure 1 by fastening bolts 24.

The robot 2, as illustrated, further comprises a control unit 200, which in the present example may form an integral part of the base 4 of the robotic arm 3 or may be adapted to be arranged between the base 4 and the structure 1.

Although being described in relation to a robotic arm 3 being operable relative to seven axes, the present disclosure may alternatively be applied to a robot having only six axes, or even fewer axes. For example, with respect to the example illustrated in Fig. 1, movement around the third axis Ax3, may be omitted, to obtain a robot operable relative to six axes.

Fig. 2 is a schematic diagram illustrating two exemplary joints 92, 94, e.g. a primary joint 92 and a secondary joint 94. The exemplary joints 92, 94 may be two successive joints of the plurality of joints 6, 8, 10, 12, 14, 16, 18 indicated in Fig. 1. For example, the primary joint 92 may be the first joint 6 of Fig. 1 and the secondary joint 94 may be the second joint 8 of Fig. 1.

Also illustrated is a primary motor 102 provided to rotate the primary joint 92. A secondary motor 104 is provided to rotate the secondary joint 94. Thus, the primary motor 102 may be a first motor for causing movement of the first joint 6 with respect to the first axis Ax1 of Fig. 1. The secondary motor 104 may be a second motor for causing movement of the second joint 8 with respect to the second axis Ax2 of Fig. 1. The primary motor 102 and/or the secondary motor 104 may be a permanent magnet AC motor. Furthermore, the primary motor 102 and/or the secondary motor 104 may comprise a gear assembly, e.g. an integral gear, such as a strain wave gear. Hence, the primary motor 102 and/or the secondary motor 104 may be a gear motor.

One or more motor controller units 108, 110 may be provided and adapted to control the motors 102, 104. A primary motor controller unit 108 may be adapted to control the primary motor 102. A secondary motor controller unit 110 may be adapted to control the secondary motor 104.

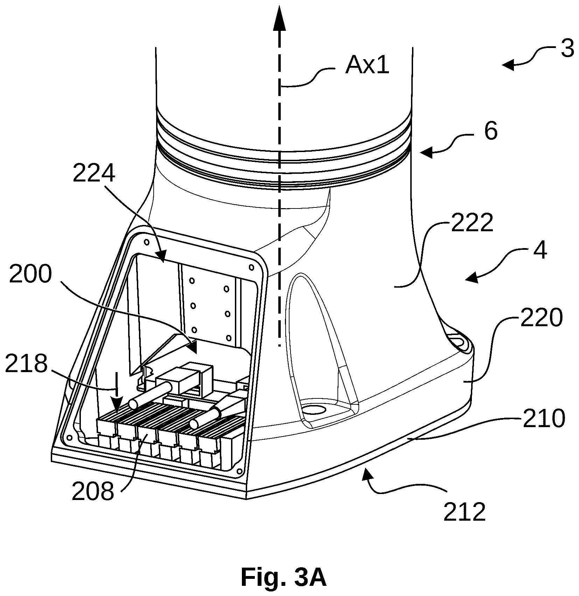

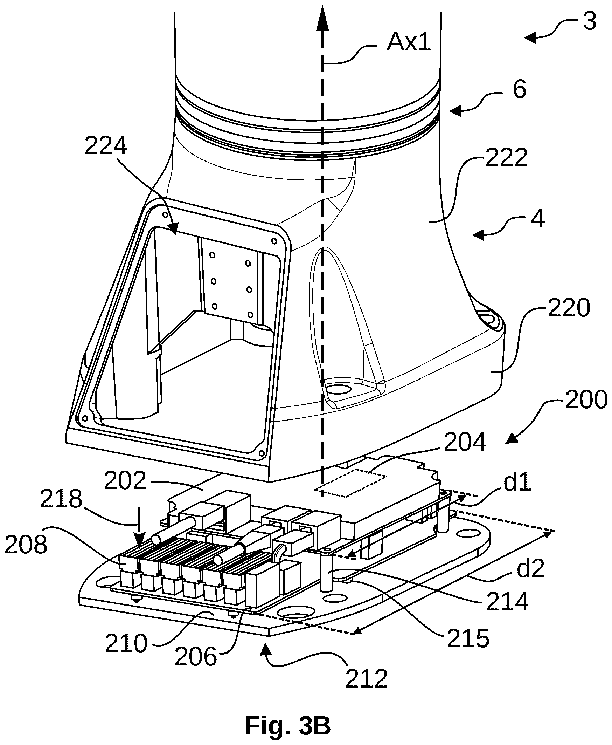

Figs. 3A and 3B are schematic diagrams illustrating an exemplary base 4 of a robotic arm 3, such as the robotic arm 3 as illustrated in Fig. 1. Also the first joint 6 is visible in Figs. 3A and 3B. Fig. 3B shows the upper part of the base 4 being separated from the bottom part to visualise internal parts of the base 4.

The base 4 comprises a control unit 200. The control unit 200 comprises a main board 202 with a main processing unit 204. The control unit 200 also comprises an IO board 206 with a plurality of IO terminals 208. The IO terminals 208 may be terminal blocks. The IO terminals 208 may be 24 volts digital IO terminals.

The control unit 200 also comprises a bottom plate 210 forming a bottom surface 212 of the control unit 200. The bottom plate 210 may be made of a material having a high thermal conductivity, such as at least 100 W/(m·K). For example, the bottom plate 210 may be made of aluminium, copper or alloys of different materials, e.g. comprising aluminium and/or copper. Thereby, the bottom plate may facilitate transfer of heat from the control unit 200 to the structure to which the robot is attached. Thus, the bottom plate 210 may be adapted to abut the structure to which the robot is to be fastened. The bottom plate 210 may be arranged perpendicular and/or substantially perpendicular to the first axis Ax1, i.e. the axis of rotation of the first joint 6.

The main board 202 is arranged to form an angle of less than 135 degrees with respect to the first axis Ax1. In some examples, the angle formed between the main board 202 and the first axis Ax1 is less than less than 120 degrees, such as less than 105 degrees, such as less than 100 degrees, such as less than 95 degrees. In some examples the angle formed between the main board 202 and the first axis Ax1 may be perpendicular or substantially perpendicular.

As seen in the presently illustrated example, the IO board 206 may be arranged between the bottom plate and the main board 202. In some examples, such as the one illustrated, the main board 202 and the IO board 206 may be substantially parallel.

The control unit may comprise a plurality of main standoffs 214 connecting the main board 202 and the bottom plate 210. The main standoffs 214 may be sized such that the IO board 206 may be arranged between the bottom plate 210 and the main board 206. For example, the main standoffs 214 connecting the main board 202 and the bottom plate 210 may be more than 1 cm, such as more than 2 cm, such as more than 3 cm. The control unit may comprise a plurality of IO standoffs 215 connecting the IO board 206 and the bottom plate 210. The IO standoffs 215 may be smaller than the main standoffs 214. The IO standoffs 215 may be less than 2 cm, such as less than 1 cm.

The plurality of IO terminals 208 may have a connection direction 218, i.e. the direction in which wires and/or connectors are being connected to the terminals. The connection direction 218 may, as illustrated, be substantially parallel to the first axis Ax1. The connection direction 218 may also or alternatively be substantially perpendicular to the IO board 206 and/or the main board 202.

The main board 202 has a main board length d1 along a length direction of the main board, e.g. perpendicular to the first axis Ax1. The IO board 206 has an IO board length d2 along a length direction of the IO board, which may be the same direction as the length direction of the main board, e.g. perpendicular to the first axis Ax1. The IO board length d2 may be longer than the main board length d1. Thereby, the IO terminals 208 may be easily accessible, even though the IO board 206 may be provided underneath the main board 202, such as between the main board 202 and the bottom plate 210.

The bottom plate 210 has a bottom plate circumference and the base 4 has a first joint circumference at the first joint 6. The bottom plate 210 has a bottom plate diameter, which is the diameter of the incircle of the bottom plate circumference. The base 4 has a first joint diameter of the first joint circumference at the first joint 6. The bottom plate circumference, the first joint circumference, the bottom plate diameter and the first joint diameter are measured in the plane normal to the first axis Ax1. The bottom plate circumference is larger than the first joint circumference and/or the bottom plate diameter is larger than the first joint diameter.

The base 4 has a first wall section 220 being substantially parallel to the first axis Ax1. The base 4 has a second wall section 222 extending from the first wall section 220 towards the first joint 6. The second wall section 222 is non-parallel to the first axis Ax1. For example the second wall section 222 may be angled relative to the first axis Ax1, e.g. to transition the base 4 from the bottom plate circumference to the first joint circumference.

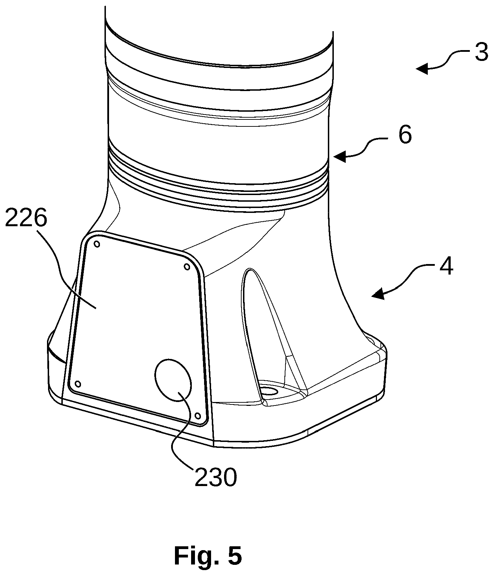

The base 4 comprises a base aperture 224 providing access to the plurality of IO terminals 208. The base 4 further may comprise a removable cover plate 226 covering the base aperture, as illustrated in Fig. 5. The base aperture 224 and/or the removable cover plate 226 may be angled relative to the first axis Ax1. Such angled aperture/cover plate may facilitate interaction with the IO terminals 208. For example, an angle between the first axis Ax1 and the base aperture 224 and/or the removable cover plate 226 may be between 10 and 60 degrees, such as between 20 and 50 degrees, such as between 25 and 40 degrees.

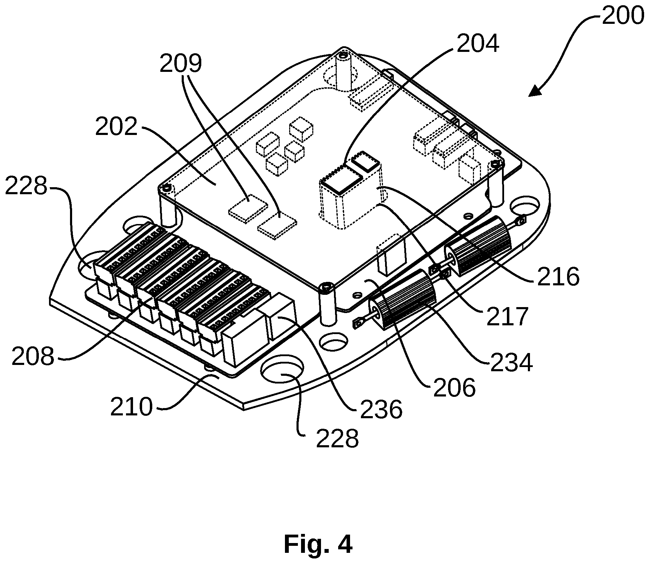

Fig. 4 is a schematic diagram illustrating an exemplary control unit 200, such as the control unit 200 as also illustrated in Figs. 3A and 3B. Fig. 4 further illustrates that the control unit 200 may comprise a heat transferring block 216 thermally connecting the main processing unit 204 and the bottom plate 210. Thereby, heat from the main processing unit 204 may be transferred to the bottom plate 210 and from the bottom plate to the structure to which the robotic arm is attached. The heat transferring block 216 may be made of a material having a high thermal conductivity, such as at least 100 W/(m·K). For example, the heat transferring block 216 may be made of aluminium, copper or alloys of different materials, e.g. comprising aluminium and/or copper. In some examples, the heat transferring block 216 may be integrally formed with the bottom plate 210.

The IO board 206 may comprise an opening 217 for the heat transferring block 216 to extend through. Thereby allowing the hat transferring block 216 to extend from the main processing unit 204 and the bottom plate 210, even when the IO board 206 is positioned between the main board 202 and the bottom plate 210.

Also visible in Fig. 4, the control unit comprises an electrical power input 236 adapted to electrically power electrical components of the robotic arm, such as the plurality of motors and/or electronic circuitries of the robotic arm.

Also illustrated in Fig. 4, the IO board comprises two IO processing units 209, where a first of the two IO processing units 209 are preferably electrically connected to a primary IO terminal of the IO terminals 208 and a second of the two IO processing units 209 are preferably electrically connected to a secondary IO terminal of the IO terminals 208, such as to facilitate safe provision of input/output signals and handling thereof, e.g. in compliance with safety standards, such as ISO 13849-1. In some examples, the two processing units 209 may be two processor cores of the same chip. However, in other examples, the two processing units 209 may be separate chips.

The bottom plate 210 may comprise a bottom plate aperture 228. In the illustrated example, the bottom plate 210 comprise two bottom plate apertures 228. The one or more bottom plate apertures 228 may form a passageway for wires being connected to the IO terminals 208. Thereby, wires connected to the IO terminals 208 may be routed out from the control unit 200 through the bottom plate 210. Thereby, wires extending from the base 4 of the robot may be limited. Particularly, in situations where the robot is positioned on an AGV/AMR, it may be beneficial to route wiring through the bottom of the robot to other control units being provided on the AGV/AMR.

As also illustrated in Fig. 4, the control unit 200 may comprise one or more energy consumption unit 234 adapted to handle excess electrical power on a power bus of the robot, e.g. due to motors of the robot generating energy in situations where they are braking an ongoing motion. The energy consumption units 234 may be arranged at the bottom plate 210. The energy consumption units 234 have for simplicity been left out from figures 3A and 3B.

Fig. 5 schematically illustrates the base 4 of the robotic arm 3, as previously described, where the base aperture 224 is covered by a removable cover plate 226. The cover plate may comprise cover plate openings 230 to form a passageway for wires being connected to the IO terminals, e.g. as an alternative to routing wires through the bottom plate aperture 228 as illustrated in Fig. 4. In some examples, the cover plate 226 may be provided without cover plate openings 230, and the customer may decide where or whether to provide a cover plate opening 230 in the cover plate 226.

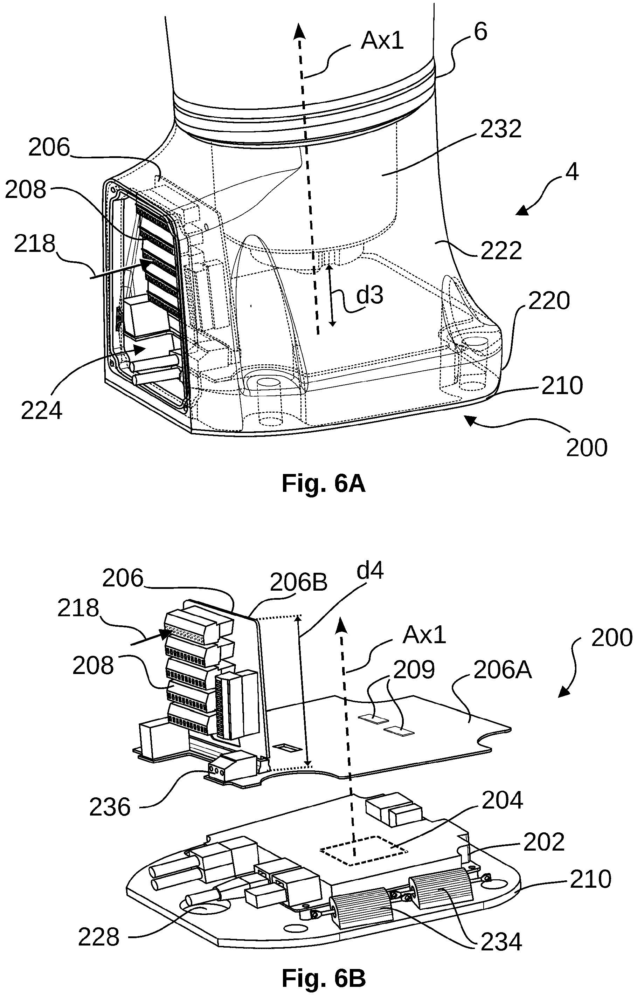

Fig. 6A schematically illustrates the base 4 of the robot with an alternative control unit 200. The control unit 200 is further schematically illustrated in a separated view in Fig. 6B without the cover of the base 4. The exemplary control unit 200 of Figs. 6A and 6b, comprises the same elements as the control unit 200 as illustrated and described in relation to the previous figures. Particularly, the control unit 200 comprises a main board 202 with a main processing unit 204 and an IO board 206 with a plurality of IO terminals 208 and two IO processing units 209. However, the arrangement of elements may differ as described in the following. The control unit 200 also comprises the bottom plate 210, which like for the previously described example, may be made of a material having a high thermal conductivity, such as to facilitate transfer of heat from the control unit 200 to the structure to which the robot is attached. The bottom plate 210 may, like with the previously described example, be arranged perpendicular and/or substantially perpendicular to the first axis Ax1. Similarly, the main board 202 may be arranged to form an angle of less than 135 degrees, or substantially perpendicularly, with respect to the first axis Ax1.

In the example, as illustrated in Figs. 6A and 6B, the main board 202 is arranged between the bottom plate 210 and the IO board 206. Also the IO board 206 comprises a first IO board part 206A and a second IO board part 206B. The second IO board part 206B comprises the IO terminals 208. Furthermore, the first IO board part 206A is non-parallel to the second IO board part 206B. For example, the first IO board part 206A may be angled relative to the second IO board part 206B by between 70-90 degrees, such as between 80-90 degrees. For example, the first IO board part 206A may be perpendicular to the second IO board part 206B. The main board 202 and the first IO board part 206A may be substantially parallel. The second IO board part 206B and the first axis Ax1 may be substantially parallel.

The plurality of IO terminals 208, in the illustrated example, has a connection direction 218, i.e. the direction in which wires and/or connectors are being connected to the terminals, which may be substantially perpendicular to the first axis Ax1. The connection direction 218 may also or alternatively be substantially perpendicular to the second IO board part 206B.

The second IO board part 206B has a second IO board part length d4 along the first axis Ax1 from the first IO board part 206A. The first motor 232 is being spaced from the first IO board part 206A by a first motor to first IO board part distance d3. The second IO board part length d4 is longer than the first motor to first IO board part distance d3. This means that the control unit 200 may be made more compact, since the second IO board part extends along the side of the first motor 232.

Like in the previous examples the base 4 has a first wall section 220 being substantially parallel to the first axis Ax1 and a second wall section 222 extending from the first wall section 220 towards the first joint 6. Furthermore, the base 4 comprises a base aperture 224, which may be covered by a removable cover plate 226, as illustrated in Fig. 5. Furthermore, like for the previous examples, the bottom plate 210 may comprise one or more bottom plate aperture 228 to form a passageway for wires being connected to the IO terminals 208.

The disclosure has been described with reference to a preferred embodiment. However, the scope of the invention is not limited to the illustrated embodiment, and alterations and modifications can be carried out without deviating from the scope of the invention.

Throughout the description, the use of the terms "first", "second", "third", "fourth", "primary", "secondary", "tertiary" etc. does not imply any particular order or importance but are included to identify individual elements. Furthermore, the labelling of a first element does not imply the presence of a second element and vice versa.

### LIST OF REFERENCES

- 1: structure
- 2: robot
- 3: robotic arm
- 4: base
- 6: first joint
- 8: second joint
- 10: third joint
- 12: fourth joint
- 14: fifth joint
- 16: sixth joint
- 18: seventh joint
- 20: base end
- 22: tool end
- 24: fastening bolts

- 92: primary joint
- 94: secondary joint
- 102: primary motor
- 104: secondary motor
- 108: primary processing unit
- 110: secondary processing unit

- 200: control unit
- 202: main board
- 204: main processing unit
- 206: IO board
- 206A: first IO board part
- 206B: second IO board part
- 208: IO terminals
- 209: IO processing unit
- 210: bottom plate
- 212: bottom surface
- 214: main standoff
- 215: IO standoff
- 216: heat transferring block
- 217: opening
- 218: connection direction
- 220: first wall section
- 222: second wall section
- 224: base aperture
- 226: removable cover plate
- 228: bottom plate aperture
- 230: cover plate opening
- 232: first motor
- 234: energy consumption unit
- 236: power input

- d1: main board length
- d2: IO board length
- d3: first motor to first IO board part distance
- d4: second IO board part length

- Ax1: first axis
- Ax2: second axis
- Ax3: third axis
- Ax4: fourth axis
- Ax5: fifth axis
- Ax6: sixth axis
- Ax7: seventh axis

## Claims

1. A control unit (200) for a robot (2), the robot (2) comprising a robotic arm (3) extending between a base end (20) and a tool end (22) and comprising a base (4) at the base end (20) and a plurality of joints (6, 8, 10, 12, 14, 16, 18, 92, 94) including a first joint (6) and a second joint (8), the plurality of joints connecting the base (4) and the tool end (22), the first joint (6) being positioned between the base (4) and the second joint (8), the robotic arm (3) further comprising a plurality of motors (102, 104, 232) including a first motor (232) and a second motor, the plurality of motors cause movement of the robotic arm (3) with respect to a plurality of axes (Ax1, Ax2, Ax3, Ax4, Ax5, Ax6, Ax7), the first motor (232) causes movement of the first joint (6) with respect to a first axis (Ax1), and the second motor causes movement of the second joint (8) with respect to a second axis (Ax2), wherein the control unit (200) is **characterized in that**
the control unit (200) being adapted to be arranged at the base end (20) of the robotic arm (3) to form part of the base (4) of the robotic arm (3),
the control unit (200) comprising an IO board (206) with a plurality of 24 volts digital IO terminals (215), and a bottom plate (210) forming a bottom surface (212) of the control unit (200), the control unit (200) further comprises an electrical power input (236) adapted to electrically power the plurality of motors (102, 104, 232),
the IO board (206) comprises a first IO processing unit (209) and a second IO processing unit (209), and the plurality of 24 volts digital IO terminals (215) comprises a first primary IO terminal (208) electrically connected to the first IO processing unit (209) and a first secondary IO terminal (208) electrically connected to the second IO processing unit (209).

2. Control unit according to claim 1, wherein the plurality of 24 volts digital IO terminals (215) has a connection direction (218) being substantially parallel to the first axis (Ax1).

3. Control unit according to any of the preceding claims, wherein the control unit (200) comprises a main board (202) with a main processing unit (204), and wherein the main board (202) is arranged to form an angle of less than 135 degrees with respect to the first axis (Ax1).

4. Control unit according to claim 3, wherein the control unit (200) comprises a plurality of main standoffs (214) connecting the main board (202) and the bottom plate (210).

5. Control unit according to any of claims 3-4, wherein the IO board (206) is arranged between the bottom plate (210) and the main board (202), and/or wherein the main board (202) and the IO board (206) are substantially parallel.

6. Control unit according to any of claims 3-5, wherein the control unit (200) comprises a heat transferring block (216) thermally connecting the main processing unit (204) and the bottom plate (210), wherein the IO board (206) comprises an opening, and wherein the heat transferring block (216) extends through the opening.

7. Control unit according to any of claims 3-6, wherein the IO board (206) has an IO board length (d2) along a first direction perpendicular to the first axis (Ax1) and the main board (202) has a main board length (d1) along the first direction perpendicular to the first axis (Ax1), the IO board length (d2) being longer than the main board length (d1).

8. Control unit according to claim 3, wherein the main board (202) is arranged between the bottom plate (210) and the IO board (206).

9. Control unit according to any of the preceding claims, wherein the IO board (206) comprises a first IO board part (206A) and a second IO board part (206B), the second IO board part (206B) comprising the plurality of 24 volts digital IO terminals (215), wherein the first IO board part (206A) is non-parallel to the second IO board part (206B).

10. Control unit according to claim 9, wherein the main board (202) and the first IO board part (206A) are substantially parallel and/or wherein the second IO board part (206B) and the first axis (Ax1) are substantially parallel, when the control unit (200) is arranged at the base end (20) of the robotic arm (3).

11. Control unit according to any of claims 9-10, wherein the second IO board part (206B) has a second IO board part length (d4) along the first axis (Ax1) from the first IO board part (206A), when the control unit (200) is arranged at the base end (20) of the robotic arm (3), the first motor (232) being spaced from the first IO board part (206A) by a first motor to first IO board part distance (d3), when the control unit (200) is arranged at the base end (20) of the robotic arm (3), and the second IO board part length (d4) being longer than the first motor to first IO board part distance (d3).

12. Control unit according to any of the preceding claims, wherein the bottom plate (210) comprises a bottom plate aperture (228) to form a passageway for wires being connected to the plurality of 24 volts digital IO terminals (215).

13. Control unit according to any of the preceding claims, wherein the control unit (200) comprises an energy consumption unit (234), wherein the energy consumption unit (234) is arranged at the bottom plate (210), e.g. with a heat dissipating surface of the energy consumption unit (234) abutting the bottom plate (210).

14. A robot (2) comprising a robotic arm (3) extending between a base end (20) and a tool end (22) and comprising a base (4) at the base end (20) and a plurality of joints (6, 8, 10, 12, 14, 16, 18) including a first joint (6) and a second joint (8), the plurality of joints connecting the base (4) and the tool end (22), the first joint (6) being positioned between the base (4) and the second joint (8),
the robotic arm (3) comprises a plurality of motors (102, 104, 232) including a first motor (232) and a second motor, the plurality of motors (102, 104, 232) cause movement of the robotic arm (3) with respect to a plurality of axes (Ax1, Ax2, Ax3, Ax4, Ax5, Ax6, Ax7), the first motor (232) causes movement of the first joint (6) with respect to a first axis (Ax1), and the second motor causes movement of the second joint (8) with respect to a second axis (Ax2),
wherein the robot is **characterized in that** the base of the robotic arm comprises the control unit (200) according to any one of the preceding claims.

15. Robot according to claim 14, wherein the base of the robotic arm comprises a base aperture (224) providing access to the plurality of 24 volts digital IO terminals (215), wherein the base further comprises a removable cover plate (226) covering the base aperture (224), and wherein the base aperture (224) is angled relative to the first axis (Ax1).

## Patentansprüche

1. Steuereinheit (200) für einen Roboter (2), wobei der Roboter (2) einen Roboterarm (3) umfasst, der sich zwischen einem Basisende (20) und einem Werkzeugende (22) erstreckt und eine Basis (4) an dem Basisende (20) und eine Vielzahl von Gelenken (6, 8, 10, 12, 14, 16, 18, 92, 94) umfasst, einschließlich eines ersten Gelenks (6) und eines zweiten Gelenks (8), wobei die Vielzahl von Gelenken die Basis (4) und das Werkzeugende (22) verbinden, wobei das erste Gelenk (6) zwischen der Basis (4) und dem zweiten Gelenk (8) positioniert ist, wobei der Roboterarm (3) weiter eine Vielzahl von Motoren (102, 104, 232) umfasst, einschließlich eines ersten Motors (232) und eines zweiten Motors, wobei die Vielzahl von Motoren eine Bewegung des Roboterarms (3) in Bezug auf eine Vielzahl von Achsen (Ax1, Ax2, Ax3, Ax4, Ax5, Ax6, Ax7) bewirken, wobei der erste Motor (232) eine Bewegung des ersten Gelenks (6) in Bezug auf eine erste Achse (Ax1) bewirkt und der zweite Motor eine Bewegung des zweiten Gelenks (8) in Bezug auf eine zweite Achse (Ax2) bewirkt, wobei die Steuereinheit (200) **dadurch gekennzeichnet ist, dass**
die Steuereinheit (200) so angepasst ist, dass sie an dem Basisende (20) des Roboterarms (3) angeordnet wird, um einen Teil der Basis (4) des Roboterarms (3) zu bilden,
die Steuereinheit (200) eine EA-Platine (206) mit einer Vielzahl von 24-Volt-Digital-EA-Anschlüssen (215) und eine Bodenplatte (210) umfasst, die eine Bodenfläche (212) der Steuereinheit (200) bildet, wobei die Steuereinheit (200) weiter einen elektrischen Stromeingang (236) umfasst, der so angepasst ist, dass er die Vielzahl von Motoren (102, 104, 232) elektrisch versorgt,
die EA-Platine (206) eine erste EA-Verarbeitungseinheit (209) und eine zweite EA-Verarbeitungseinheit (209) umfasst, und die Vielzahl von 24-Volt-Digital-EA-Anschlüssen (215) einen ersten primären EA-Anschluss (208), der elektrisch mit der ersten EA-Verarbeitungseinheit (209) verbunden ist, und einen ersten sekundären EA-Anschluss (208), der elektrisch mit der zweiten EA-Verarbeitungseinheit (209) verbunden ist, umfasst.

2. Steuereinheit nach Anspruch 1, wobei die Vielzahl von 24-Volt-Digital-EA-Anschlüssen (215) eine Verbindungsrichtung (218) aufweist, die im Wesentlichen parallel zu der ersten Achse (Ax1) verläuft.

3. Steuereinheit nach einem der vorstehenden Ansprüche, wobei die Steuereinheit (200) eine Hauptplatine (202) mit einer Hauptverarbeitungseinheit (204) umfasst, und wobei die Hauptplatine (202) so angeordnet ist, dass sie einen Winkel von weniger als 135 Grad in Bezug auf die erste Achse (Ax1) bildet.

4. Steuereinheit nach Anspruch 3, wobei die Steuereinheit (200) eine Vielzahl von Hauptabstandshaltern (214) umfasst, die die Hauptplatine (202) und die Bodenplatte (210) verbinden.

5. Steuereinheit nach einem der Ansprüche 3 - 4, wobei die EA-Platine (206) zwischen der Bodenplatte (210) und der Hauptplatine (202) angeordnet ist, und/oder wobei die Hauptplatine (202) und die EA-Platine (206) im Wesentlichen parallel sind.

6. Steuereinheit nach einem der Ansprüche 3 - 5, wobei die Steuereinheit (200) einen Wärmeübertragungsblock (216) umfasst, der die Hauptverarbeitungseinheit (204) und die Bodenplatte (210) thermisch verbindet, wobei die EA-Platine (206) eine Öffnung umfasst, und wobei sich der Wärmeübertragungsblock (216) durch die Öffnung erstreckt.

7. Steuereinheit nach einem der Ansprüche 3 - 6, wobei die EA-Platine (206) eine EA-Platinenlänge (d2) entlang einer ersten Richtung senkrecht zu der ersten Achse (Ax1) aufweist und die Hauptplatine (202) eine Hauptplatinenlänge (d1) entlang der ersten Richtung senkrecht zu der ersten Achse (Ax1) aufweist, wobei die EA-Platinenlänge (d2) länger als die Hauptplatinenlänge (d1) ist.

8. Steuereinheit nach Anspruch 3, wobei die Hauptplatine (202) zwischen der Bodenplatte (210) und der EA-Platine (206) angeordnet ist.

9. Steuereinheit nach einem der vorstehenden Ansprüche, wobei die EA-Platine (206) einen ersten EA-Platinenteil (206A) und einen zweiten EA-Platinenteil (206B) umfasst, wobei der zweite EA-Platinenteil (206B) die Vielzahl von 24-Volt-Digital-EA-Anschlüssen (215) umfasst, wobei der erste EA-Platinenteil (206A) nicht parallel zu dem zweiten EA-Platinenteil (206B) ist.

10. Steuereinheit nach Anspruch 9, wobei die Hauptplatine (202) und der erste EA-Platinenteil (206A) im Wesentlichen parallel sind und/oder wobei der zweite EA-Platinenteil (206B) und die erste Achse (Ax1) im Wesentlichen parallel sind, wenn die Steuereinheit (200) an dem Basisende (20) des Roboterarms (3) angeordnet ist.

11. Steuereinheit nach einem der Ansprüche 9 - 10, wobei der zweite EA-Platinenteil (206B) eine zweite EA-Platinenteillänge (d4) entlang der ersten Achse (Ax1) von dem ersten EA-Platinenteil (206A) aufweist, wenn die Steuereinheit (200) an dem Basisende (20) des Roboterarms (3) angeordnet ist, wobei der erste Motor (232) von dem ersten EA-Platinenteil (206A) um einen erster Motor-zu-erstem-EA-Platinenteil-Abstand (d3) beabstandet ist, wenn die Steuereinheit (200) an dem Basisende (20) des Roboterarms (3) angeordnet ist, und die zweite EA-Platinenteillänge (d4) länger als der erste Motor-zu-erstem-EA-Platinenteil-Abstand (d3) ist.

12. Steuereinheit nach einem der vorstehenden Ansprüche, wobei die Bodenplatte (210) eine Bodenplattenöffnung (228) umfasst, um einen Durchgang für Drähte zu bilden, die mit der Vielzahl von 24-Volt-Digital-EA-Anschlüssen (215) verbunden sind.

13. Steuereinheit nach einem der vorstehenden Ansprüche, wobei die Steuereinheit (200) eine Energieverbrauchseinheit (234) umfasst, wobei die Energieverbrauchseinheit (234) an der Bodenplatte (210) angeordnet ist, z.B. mit einer wärmeabgebenden Oberfläche der Energieverbrauchseinheit (234), die an der Bodenplatte (210) anliegt.

14. Roboter (2), umfassend einen Roboterarm (3), der sich zwischen einem Basisende (20) und einem Werkzeugende (22) erstreckt und eine Basis (4) an dem Basisende (20) und eine Vielzahl von Gelenken (6, 8, 10, 12, 14, 16, 18) umfasst, einschließlich eines ersten Gelenks (6) und eines zweiten Gelenks (8), wobei die Vielzahl von Gelenken die Basis (4) und das Werkzeugende (22) verbindet, wobei das erste Gelenk (6) zwischen der Basis (4) und dem zweiten Gelenk (8) positioniert ist, wobei der Roboterarm (3) eine Vielzahl von Motoren (102, 104, 232) umfasst, einschließlich eines ersten Motors (232) und eines zweiten Motors, die Vielzahl von Motoren (102, 104, 232) eine Bewegung des Roboterarms (3) in Bezug auf eine Vielzahl von Achsen (Ax1, Ax2, Ax3, Ax4, Ax5, Ax6, Ax7) bewirken, der erste Motor (232) eine Bewegung des ersten Gelenks (6) in Bezug auf eine erste Achse (Ax1) bewirkt, und der zweite Motor eine Bewegung des zweiten Gelenks (8) in Bezug auf eine zweite Achse (Ax2) bewirkt, wobei der Roboter **dadurch gekennzeichnet ist, dass** die Basis des Roboterarms die Steuereinheit (200) nach einem der vorstehenden Ansprüche umfasst.

15. Roboter nach Anspruch 14, wobei die Basis des Roboterarms eine Basisöffnung (224) umfasst, die Zugang zu der Vielzahl von 24-Volt-Digital-EA-Anschlüssen (215) bietet, wobei die Basis weiter eine abnehmbare Abdeckplatte (226) umfasst, die die Basisöffnung (224) abdeckt, und wobei die Basisöffnung (224) relativ zu der ersten Achse (Ax1) abgewinkelt ist.

## Revendications

1. Unité de commande (200) destinée à un robot (2), le robot (2) comprenant un bras robotique (3) s'étendant entre une extrémité base (20) et une extrémité outil (22) et comprenant une base (4) au niveau de l'extrémité base (20) et une pluralité de raccords (6, 8, 10, 12, 14, 16, 18, 92, 94) incluant un premier raccord (6) et un deuxième raccord (8), la pluralité de raccords connectant la base (4) et l'extrémité outil (22), le premier raccord (6) étant positionné entre la base (4) et le deuxième raccord (8), le bras robotique (3) comprenant en outre une pluralité de moteurs (102, 104, 232) incluant un premier moteur (232) et un deuxième moteur, la pluralité de moteurs entraîne un déplacement du bras robotique (3) par rapport à une pluralité d'axes (Ax1, Ax2, Ax3, Ax4, Ax5, Ax6, Ax7), le premier moteur (232) entraîne un déplacement du premier raccord (6) par rapport à un premier axe (Ax1), et le deuxième moteur entraîne un déplacement du deuxième raccord (8) par rapport à un deuxième axe (Ax2), dans laquelle l'unité de commande (200) est **caractérisée en ce que**
l'unité de commande (200) est adaptée pour être agencée au niveau de l'extrémité base (20) du bras robotique (3) pour former une partie de la base (4) du bras robotique (3),
l'unité de commande (200) comprenant une carte IO (206) avec une pluralité de bornes IO numériques 24 volts (215), et une plaque de fond (210) formant une surface de fond (212) de l'unité de commande (200), l'unité de commande (200) comprend en outre une entrée d'alimentation électrique (236) adaptée pour alimenter électriquement la pluralité de moteurs (102, 104, 232),
la carte IO (206) comprend une première unité de traitement IO (209) et une deuxième unité de traitement IO (209), et la pluralité de bornes IO numériques 24 volts (215) comprend une première borne IO (208) primaire électriquement connectée à la première unité de traitement IO (209) et une première borne IO (208) secondaire électriquement connectée à la deuxième unité de traitement IO (209).

2. Unité de commande selon la revendication 1, dans laquelle la pluralité de bornes IO numériques 24 volts (215) présente une direction de connexion (218) qui est sensiblement parallèle au premier axe (Ax1).

3. Unité de commande selon l'une quelconque des revendications précédentes, dans laquelle l'unité de commande (200) comprend une carte principale (202) pourvue d'une unité de traitement principale (204), et dans laquelle la carte principale (202) est conçue pour former un angle de moins de 135 degrés par rapport au premier axe (Ax1).

4. Unité de commande selon la revendication 3, dans laquelle l'unité de commande (200) comprend une pluralité de douilles-entretoises principales (214) connectant la carte principale (202) et la plaque de fond (210).

5. Unité de commande selon l'une quelconque des revendications 3 et 4, dans laquelle la carte IO (206) est agencée entre la plaque de fond (210) et la carte principale (202), et/ou dans laquelle la carte principale (202) et la carte IO (206) sont sensiblement parallèles.

6. Unité de commande selon l'une quelconque des revendications 3 à 5, dans laquelle l'unité de commande (200) comprend un bloc de transfert de chaleur (216) connectant thermiquement l'unité de traitement principale (204) et la plaque de fond (210), dans laquelle la plaque IO (206) comprend une ouverture, et dans laquelle le bloc de transfert de chaleur (216) s'étend à travers l'ouverture.

7. Unité de commande selon l'une quelconque des revendications 3 à 6, dans laquelle la carte IO (206) présente une longueur de carte IO (d2) le long d'une première direction perpendiculaire au premier axe (Ax1) et la carte principale (202) présente une longueur de carte principale (d1) le long de la première direction perpendiculaire au premier axe (Ax1), la longueur de carte IO (d2) étant plus longue que la longueur de carte principale (d1).

8. Unité de commande selon la revendication 3, dans laquelle la carte principale (202) est agencée entre la plaque de fond (210) et la carte IO (206).

9. Unité de commande selon l'une quelconque des revendications précédentes, dans laquelle la carte IO (206) comprend une première partie de carte IO (206A) et une deuxième partie de carte IO (206B), la deuxième partie de carte IO (206B) comprenant la pluralité de bornes IO numériques 24 volts (215), dans laquelle la première partie de carte IO (206A) est non parallèle à la deuxième partie de carte IO (206B).

10. Unité de commande selon la revendication 9, dans laquelle la carte principale (202) et la première partie de carte IO (206A) sont sensiblement parallèles et/ou dans laquelle la deuxième partie de carte IO (206B) et le premier axe (Ax1) sont sensiblement parallèles, lorsque l'unité de commande (200) est agencée au niveau de l'extrémité base (20) du bras robotique (3).

11. Unité de commande selon l'une quelconque des revendications 9 et 10, dans laquelle la deuxième partie de carte IO (206B) présente une longueur de deuxième partie de carte IO (d4) le long du premier axe (Ax1) depuis la première partie de carte IO (206A), lorsque l'unité de commande (200) est agencée au niveau de l'extrémité base (20) du bras robotique (3), le premier moteur (232) étant espacé de la première partie de carte IO (206A) d'une distance (d3) de premier moteur à première partie de carte IO (d3), lorsque l'unité de commande (200) est agencée au niveau de l'extrémité base (20) du bras robotique (3), et la longueur de deuxième partie de carte IO (d4) étant plus longue que la distance (d3) de premier moteur à première partie de carte IO.

12. Unité de commande selon l'une quelconque des revendications précédentes, dans laquelle la plaque de fond (210) comprend une ouverture (228) de plaque de fond pour former un passage pour des fils qui sont connectés à la pluralité de bornes IO numériques 24 volts (215).

13. Unité de commande selon l'une quelconque des revendications précédentes, dans laquelle l'unité de commande (200) comprend une unité de consommation d'énergie (234), dans laquelle l'unité de consommation d'énergie (234) est agencée au niveau de la plaque de fond (210), par exemple avec une surface de dissipation de chaleur de l'unité de consommation d'énergie (234) venant en butée contre la plaque de fond (210).

14. Robot (2) comprenant un bras robotique (3) s'étendant entre une extrémité base (20) et une extrémité outil (22) et comprenant une base (4) au niveau de l'extrémité base (20) et une pluralité de raccords (6, 8, 10, 12, 14, 16, 18) incluant un premier raccord (6) et un deuxième raccord (8), la pluralité de raccords connectant la base (4) et l'extrémité outil (22), le premier raccord (6) étant positionné entre la base (4) et le deuxième raccord (8),
le bras robotique (3) comprend en outre une pluralité de moteurs (102, 104, 232) incluant un premier moteur (232) et un deuxième moteur, la pluralité de moteurs (102, 104, 232) entraînent un déplacement du bras robotique (3) par rapport à une pluralité d'axes (Ax1, Ax2, Ax3, Ax4, Ax5, Ax6, Ax7), le premier moteur (232) entraîne un déplacement du premier raccord (6) par rapport à un premier axe (Ax1), et le deuxième moteur entraîne un déplacement du deuxième raccord (8) par rapport à un deuxième axe (Ax2),
dans lequel le robot est **caractérisé en ce que** la base du bras robotique comprend l'unité de commande (200) selon l'une quelconque des revendications précédentes.

15. Robot selon la revendication 14, dans lequel la base du bras robotique comprend une ouverture (224) de base donnant accès à la pluralité de bornes IO numériques 24 volts (215), dans lequel la base comprend en outre une plaque de protection amovible (226) recouvrant l'ouverture (224) de base, et dans lequel l'ouverture (224) de base est inclinée par rapport au premier axe (Ax1).
